# EUROPEAN PATENT SPECIFICATION

(11) **EP 3 552 789 B1**
(45) Date of publication and mention of the grant of the patent: **04.01.2023**
(21) Application number: 18214633.2
(22) Date of filing: 20.12.2018
(51) Int. Cl.: F26B 3/04, B29B 13/02, B29C 35/04, B29C 51/42

(54) **METHOD FOR HEATING A RESIN WORKPIECE**
VERFAHREN ZUM HEIZEN EINES WERKSTÜCKS AUS HARZ
PROCÉDÉ DE CHAUFFER D'UNE PIÈCE À USINER EN RÉSINE

(30) Priority: 19.02.2018 JP 2018027259
(43) Date of publication of application: 16.10.2019
(73) Proprietor: TOYOTA JIDOSHA KABUSHIKI KAISHA, Toyota-shi, Aichi-ken, 471-8571 (JP); Yutaka Electronics Industry Co., Ltd., Kariya-shi, Aichi-ken 448-8533 (JP)
(72) Inventor: MATSUMOTO, Yusuke, Toyota-shi, Aichi-ken 471-8571 (JP); SAKUI, Takashi, Toyota-shi, Aichi-ken 471-8571 (JP); OSA, Noburo, Nagoya, Aichi 461-8680 (JP); IMAMURA, Yukinori, Kariya-shi, Aichi-ken 448-8533 (JP)
(74) Representative: Winter, Brandl - Partnerschaft mbB

(56) References cited:
- WO-A1-2006/093112
- WO-A1-2010/026822
- WO-A1-2012/060159
- WO-A1-2013/182897
- WO-A1-2019/059159
- GB-A- 1 521 037
- JP-A- 2013 253 758

## Description

### BACKGROUND

The present disclosure relates to a method for heating a resin workpiece.

A heating apparatus that supplies superheated steam to a metal workpiece and heats the metal workpiece is known. An example of such a heating apparatus has been disclosed in Japanese Unexamined Patent Application Publication No. 2016-075466. Further, a method for manufacturing products including a process of heating a metal workpiece using such a heat apparatus is known. WO 2006/093112A1 discloses a thermoforming method wherein superheated steam is brought into contact with a planar workpiece to heat the workpiece via nozzles. GB 1 521 037 A discloses a heating process including jetting hot gas and/or steam from nozzle means directly, onto both sides of a continuous sheet.

### SUMMARY

The inventors of the present invention have found the following problems.

The above-described heating apparatus uses a nozzle to blow superheated steam on a metal workpiece so that the superheated steam is supplied to the metal workpiece. A surface of the metal workpiece on which the superheated steam is blown and an axis of the nozzle intersect roughly perpendicular to each other. One of the reasons for blowing superheated steam by using a nozzle is that since superheated steam comes into contact with a predetermined part of the metal workpiece and the superheated steam transfers heat to the part, the heat is quickly conducted from the part to other parts and the metal workpiece therefore can be heated uniformly.

The above-described heating apparatus may be used when a resin workpiece having a planar part is heated. In this case, since it is more difficult for a resin workpiece to conduct heat than a metal workpiece, the heat cannot be conducted quickly in contrast to the above-described case of heating the metal workpiece. Therefore, the temperature of each part of the resin workpiece tends to be nonuniform.

Further, although the inventors of the present invention conceived the idea of adding additional nozzles, to do so would increase the cost.

The present invention enables a resin workpiece to be heated uniformly.

A first exemplary aspect of the invention which is defined by the subject-matter of claim 1, is a method for heating a resin workpiece, including a heating process for supplying superheated steam from a plurality of nozzles to heat a resin workpiece having a planar part, and
in the heating process, the superheated steam is blown on the resin workpiece from the plurality of nozzles to heat the resin workpiece in a state that each axis of the plurality of nozzles is arranged so as to be inclined in one direction along the plane of a planar part with respect to a normal of the planar part.

With such a configuration, the superheated steam blown from the plurality of nozzles uniformly flows along the plane of the planar part of the resin workpiece. Therefore, the superheated steam quickly transmits heat to the planar part of the resin workpiece. Further, to enable a successive supply of new superheated steam, the superheated steam which has transmitted heat is quickly discharged from the planar part of the resin workpiece. Accordingly, the resin workpiece can be heated uniformly. Further, since a need to add additional nozzles decreases, the cost can be prevented from increasing due to such addition.

Further, the resin workpiece is a planar body having one main surface and the other main surface, the plurality of nozzles include a plurality of first nozzles (for example, a nozzle 3a) and a plurality of second nozzles (for example, a nozzle 4a),
in the heating process, in the one main surface of the planar body, the plurality of first nozzles are arranged so that each axis is inclined in one direction along the one main surface with respect to a normal of the one main surface, and
in the other main surface of the planar body, the plurality of second nozzles are arranged so that each axis is inclined in a direction opposite to the one direction along the one main surface with respect to a normal of the other main surface.

With such a configuration, the superheated steam is blown on the both surfaces of the resin workpiece from the respective first and the second nozzles in directions opposite to each other, and thereby flows on each of the both surfaces of the resin workpiece in directions opposite to each other. Therefore, the superheated steam circulates on each of the both surfaces of the resin workpiece. Further, the superheated steam conducts heat to the both surfaces of the resin workpiece. Accordingly, the resin workpiece can be further heated uniformly. Further, the cost can be further prevented from increasing due to the addition of the nozzle.

Further, the method for heating a resin workpiece further includes using discharge means for discharging the superheated steam (for example, exhaust ports 53 and 54), and the discharge means are provided on the downstream side of the superheated steam with respect to the resin workpiece.

With such a configuration, the superheated steam which has flowed along the resin workpiece is discharged by the discharge means. Therefore, new superheated steam can be blown successively on the resin workpiece. Thus, new superheated steam successively flows along the resin workpiece so that the superheated steam can provide heat to the resin workpiece. Accordingly, the resin workpiece can be heated quickly.

Further, the method for manufacturing a resin member further includes using shielding members, and the shielding members are provided on the both ends of the resin workpiece to shield the superheated steam.

With such a configuration, the shielding members shield superheated steam so that the discharge means can discharge the superheated steam more easily. Thus, new superheated steam successively flows along the resin workpiece so that the superheated steam can provide heat thereto. Accordingly, the resin workpiece can be further heated quickly.

The present invention enables the resin workpiece to be heated uniformly.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF DRAWINGS

Fig. 1 is a perspective view of a workpiece heating apparatus according to a first embodiment;
Fig. 2 is a cross-sectional view of the workpiece heating apparatus according to the first embodiment;
Fig. 3 is a cross-sectional view of the workpiece heating apparatus according to the first embodiment;
Fig. 4 is a cross-sectional view of the workpiece heating apparatus according to a second embodiment;
Fig. 5 is a cross-sectional view of the workpiece heating apparatus according to the second embodiment;
Fig. 6 is a cross-sectional view of a modified example of the workpiece heating apparatus according to the first embodiment; and
Fig. 7 shows a result of analyzing flow velocity.

### DESCRIPTION OF EMBODIMENTS

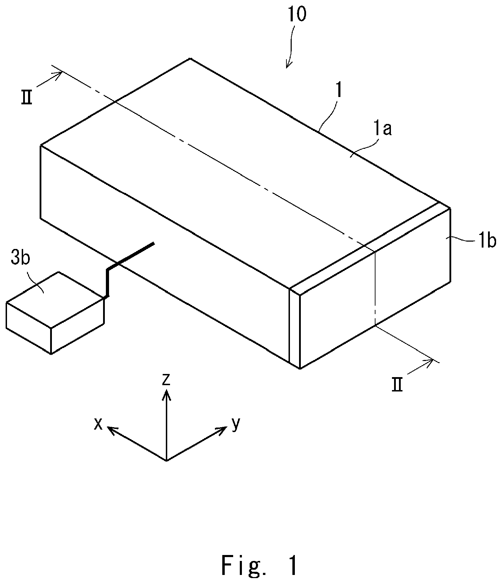

Specific embodiments to which the present invention is applied will be explained hereinafter in detail with reference to the drawings. However, the present invention is not limited to the embodiments shown below. Further, for clarifying the explanation, the following descriptions and the drawings are simplified as appropriate. In Figs. 1 to 7, three-dimensional xyz coordinates are defined.

### [First Embodiment]

A first embodiment will be described with reference to Figs. 1 to 3.

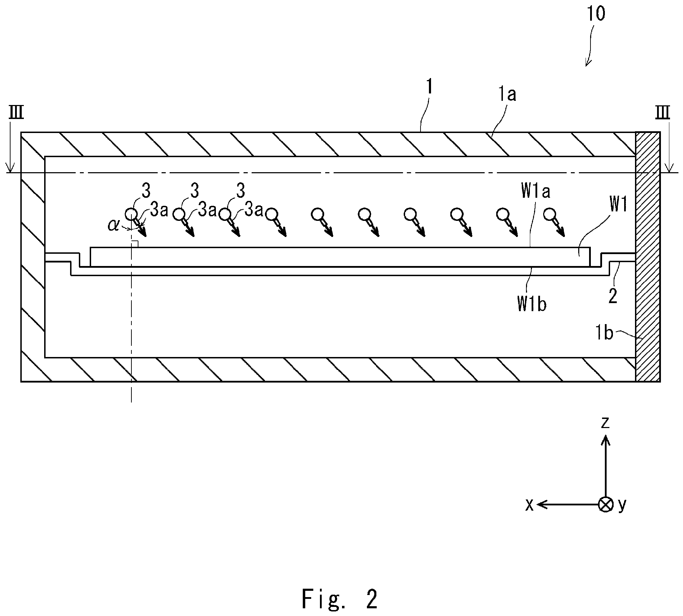

As shown in Figs. 1 and 2, a workpiece heating apparatus 10 includes a housing 1, a frame 2, and nozzles 3a.

The housing 1 includes a housing body 1a having an internal space capable of accommodating a resin workpiece W1 and a door 1b capable of being opened and closed. The frame 2 and the nozzles 3a are provided in the internal space of the housing body 1a. In the example shown in Fig.1, the housing 1 has a substantially rectangular parallelepiped shape. However, the shape of the housing 1 is not limited to that of this example and the housing body 1 has various shapes.

The resin workpiece W1 includes a resin material or a fiber-reinforced composite material. Examples of the resin material include polyethylene, polypropylene, polyurethane, polyamide (nylon), and the like. Examples of the fiber-reinforced composite material include glass fiber-reinforced plastic (GFRP), carbon fiber-reinforced plastic (CFRP), and the like. The resin workpiece W1 may have any shape provided with a planar part having a plane of a predetermined size. Examples of such shapes include a plate shape or a shape having a plate part and a thick part mechanically connected to the plate part. The resin workpiece W1 shown in Figs. 1 and 2 has a planar body including one main surface W1a and the other main surface W1b, and the one and the other main surfaces W1a and W1b correspond to the above-described plane of the planar part. Various resin members can be formed by heating the resin workpiece W1 and process the same if required. Examples of such resin members include members mounted on vehicles, such as panel members like a roof, and body members like an impact beam, a door inner, and a luggage inner.

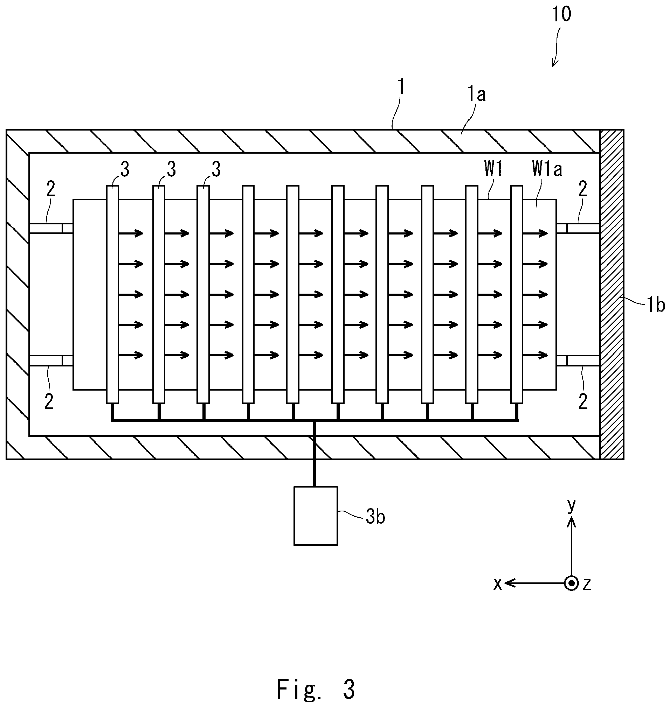

The frame 2 is disposed in the vicinity of the center of the internal space of the housing 1. The frame 2 supports the resin workpiece W1. In the example shown in Figs.2 and 3, the frame 2 has two rod-shaped bodies, but may have various other shapes such as a ladder shape, a net shape, and a tape shape.

The nozzle 3a blows superheated steam in a predetermined direction. A plurality of nozzles 3a are arranged above the frame 2 in the internal space of the housing 1 through a frame (not shown) and a pipe 3, etc. The plurality of nozzles 3a are arranged so that each axis is inclined in one direction along the plane of the planar part with respect to a normal of the planar part of the resin workpiece W1. A blowing angle α at which the axis of the nozzle 3a and the plane of the resin workpiece W1 on which the superheated steam is blown from the nozzle 3a intersect each other is within a range of between 0 (zero) ° and 90 °. The superheated steam which is blown from the nozzle 3a comes into contact with the surface of the resin workpiece W1 and then flows there along in a predetermined direction.

In the example shown in Figs. 2 and 3, the nozzle 3a is provided in the pipe 3 to which superheated steam is supplied from a superheated steam tank 3b. A plurality of pipes 3 are each arranged in a direction in which superheated steam is blown, that is, on the side of the door 1b (on the negative side in the x-axis direction of the example) so that there is a predetermined interval between each pipe 3 and the frame 2.. The plurality of nozzles 3a are arranged so that each axis is inclined toward the side of the door 1b which is one direction along the main surface W1a of the resin workpiece W1 with respect to a normal of the main surface W1a thereof. The axis of the pipe 3 extends in a direction roughly parallel to the main surface W1a of the resin workpiece W1. In the example, a plurality of nozzles 3a are arranged along an axial direction of the pipe 3. Further, there is no particular limitation on the shape of a superheated steam outlet of the nozzle 3a, and the superheated steam outlet has various shapes. The above shapes are, for example, a hole shape, a substantially circular shape, a substantially polygonal shape, or a slit shape. Further, the nozzles 3a may have the same blowing angle α and flow rate of the superheated steam or they may have different ones.

A heating process for heating the resin workpiece W1 using the workpiece heating apparatus 10 will now be described. The door 1b of the workpiece heating apparatus 10 is opened, the resin workpiece W1 is placed on the frame 2, and then the door 1b is closed. A plurality of nozzles 3a are arranged so that each axis is inclined toward the side of the door 1b which is one direction along the main surface W1a of the planar part of the resin workpiece W1 with respect to a normal of the planar part thereof. In this state, superheated steam is blown on the resin workpiece W1 from the plurality of nozzles 3a. Then, the superheated steam blown from the plurality of nozzles 3 a comes into contact with the main surface W1a of the resin workpiece W1 and then uniformly flows toward the side of the door 1b along the main surface W1a of the resin workpiece W1. The superheated steam which has flowed along the main surface W1a quickly transmits heat to each part of the main surface W1a of the resin workpiece W1 in contact with the superheated steam. To enable a successive supply of new superheated steam from the nozzle 3a, the superheated steam which has transmitted heat is quickly discharged from the main surface W1a of the resin workpiece W1. Accordingly, the resin workpiece W1 can be uniformly heated without increasing the number of the nozzles 3a to be installed per area in the main surface W1a. Thus, as additional nozzles 3a do not need to be installed, the cost can be prevented from increasing. Further, this heating process can be used, for example, as one process of a method for manufacturing a resin member.

### [Second Embodiment]

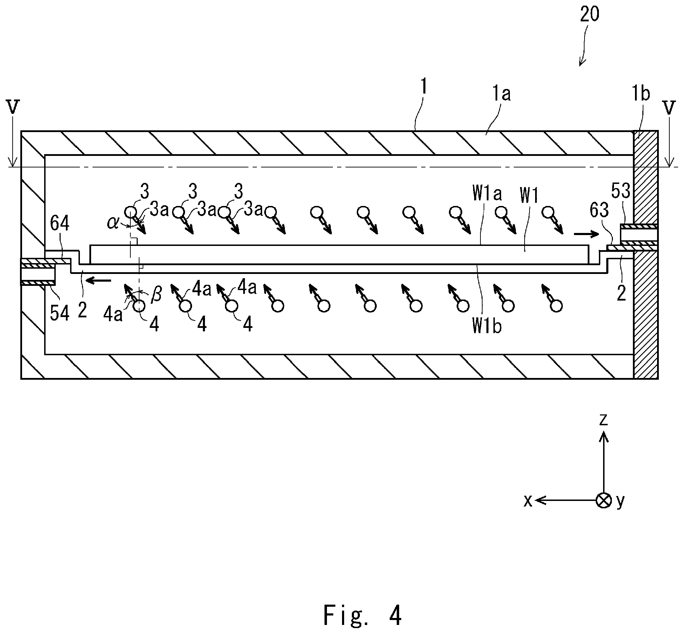

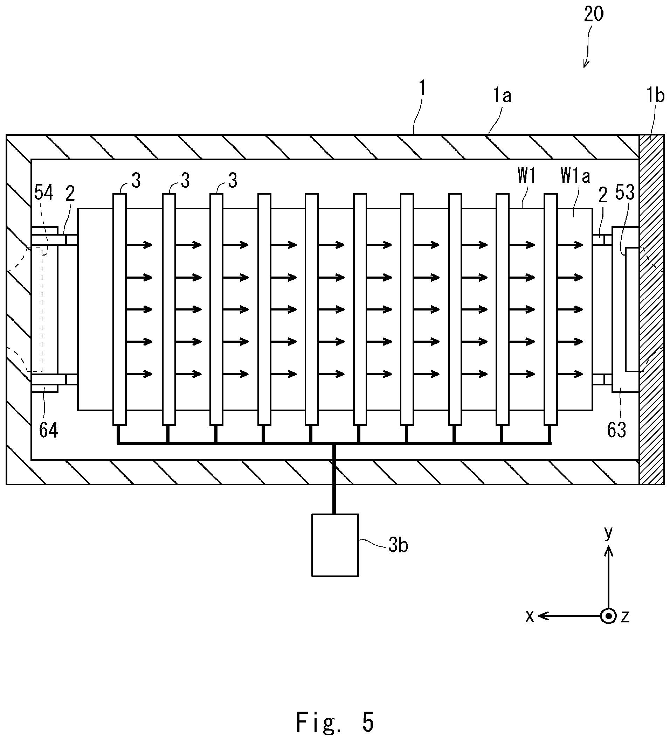

A second embodiment will be described with reference to Figs. 4 and 5.

As shown in Figs. 4 and 5, a workpiece heating apparatus 20 has the same configuration as the workpiece heating apparatus 10 has (see Figs. 1 to 3) except that a nozzle 4a, exhaust ports 53 and 54, and shielding plates 63 and 64 are further included.

The nozzle 4a has the same configuration as the nozzle 3a has, and blows superheated steam in a predetermined direction. A plurality of the nozzles 4a are arranged below the frame 2 in the internal space of the housing 1 through a frame (not shown) and a pipe 4, etc. In the other main surface W1b of the resin workpiece W1, the plurality of nozzles 4a are arranged so that each axis is inclined in a direction opposite to one direction along one main surface W1a (to the positive side in the x-axis direction of the example) with respect to a normal of the other main surface W1b. The nozzle 3a and the nozzle 4a sandwich the frame 2 and the resin workpiece W1 supported by the frame 2. The plurality of nozzles 4a blows superheated steam in a direction opposite to the direction in which the nozzle 3a blows superheated steam (on the positive side in the x-axis direction of the example). A blowing angle β at which the axis of the nozzle 4a and the main surface W1b on which the superheated steam is blown from the nozzle 4a intersect each other is within a range of between 0 (zero) ° and 90 °. The superheated steam which is blown from the nozzle 4a comes into contact with the surface of the resin workpiece W1 and then flows there along in a direction opposite to the direction in which superheated stem is blown from the nozzle 3a.

In the example shown in Figs. 4 and 5, the nozzle 4a is provided in the pipe 4 to which superheated steam is supplied from the superheated steam tank 3b. A plurality of pipes 4 are arranged in a direction in which superheated steam is blown (on the positive side in the x-axis direction of the example) so that there is a predetermined interval between each pipe 4 and the frame 2. The axis of the pipe 4 extends in a direction roughly parallel to the other main surface W1b of the resin workpiece W1 (in the y-axis direction of the example). In the example, a plurality of nozzles 4a are arranged along an axial direction of the pipe 4.

The exhaust port 53 is provided on the downstream side of the superheated steam supplied from the nozzle 3a, and the exhaust port 54 is provided on the downstream side of the superheated steam supplied from the nozzle 4a. The exhaust ports 53 and 54 can discharge superheated steam from the internal space of the workpiece heating apparatus 20 to outside the workpiece heating apparatus 20.

The shielding plate 64 is provided in the housing body 1a between the frame 2 and the exhaust port 54. The shielding plate 63 is provided in the door 1b between the frame 2 and the exhaust port 53. That is, the shielding plates 63 and 64 are respectively provided at both ends of the resin workpiece W1. A size of a space between one end of the resin workpiece W1 and the shielding plate 63 may be a size in which the resin workpiece W1 and the shielding plate 63 mechanically do not interfere with each other even when the resin workpiece W1 is thermally expanded by superheated steam, and may be a size capable of securing shielding performance of the required superheated steam. Similarly, a size of a space between one end of the resin workpiece W1 and the shielding plate 64 may be a size in which the resin workpiece W1 and the shielding plate 64 mechanically do not interfere with each other even when the resin workpiece W1 is thermally expanded by superheated steam, and may be a size capable of securing shielding performance of the required superheated steam. In the example shown in Figs. 4 and 5, the shielding panel 63 shields superheated steam supplied from the nozzle 3a and thus prevents the superheated steam from entering the side of the main surface W1b in the internal space of the housing body 1a. Accordingly, the superheated steam stays in the vicinity of the exhaust port 53 so as to be easily discharged therefrom to outside the housing body 1a. Similarly, in the example shown in Figs. 4 and 5, the shielding panel 64 shields superheated steam supplied from the nozzle 4a and thus prevents the superheated steam from entering the side of the main surface W1a in the internal space of the housing body 1a. Accordingly, the superheated steam stays in the vicinity of the exhaust port 54 so as to be easily discharged therefrom to outside the housing body 1a.

A heating process for heating the resin workpiece W1 using the workpiece heating apparatus 20 will now be described. The door 1b of the workpiece heating apparatus 20 is opened, the resin workpiece W1 is placed on the frame 2, and then the door 1b is closed. A plurality of nozzles 4a are arranged so that each axis is inclined in one direction along the main surface W1b of the planar part of the resin workpiece W1 with respect to a normal of the planar part thereof in the same manner that the plurality of nozzles 3a are. In this state, superheated steam is blown on the resin workpiece W1 from the plurality of nozzles 3a and 4a. Then, the superheated steam blown from the plurality of nozzles 3a and 4a comes into contact with the main surfaces W1a and W1b of the resin workpiece W1, and then uniformly flows along the main surfaces W1a and W1b of the resin workpiece W1. The superheated steam which has flowed along the main surfaces W1a and W1b of the resin workpiece W1 transmits heat to each part of the main surfaces W1a and W1b in contact with the superheated steam. By this flow of the superheated steam, the heat is transmitted to each part of the main surfaces W1a and W1b of the resin workpiece W1 with which the superheated steam successively comes into contact. Accordingly, the resin workpiece W1 can be uniformly heated without increasing the number of the nozzles 3a and 4a to be installed per area in the respective main surfaces W1a and W1b. Thus, as additional nozzles 3a and 4a do not need to be installed, the cost can be prevented from increasing.

Further, in this heating process, superheated steam is blown on both sides of the resin workpiece W1 from the nozzles 3a and 4a, that is, on each of the main surfaces W1a and W1b. Accordingly, the superheated steam flows on each of the main surfaces W1a and W1b of the resin workpiece W1 in directions opposite to each other. Therefore, the superheated steam circulates on each of the main surfaces W1a and W1b of the resin workpiece W1. Further, the superheated steam conducts heat to the each of the main surfaces W1a and W1b of the resin workpiece W1. Accordingly, the resin workpiece W1 can be further heated uniformly. Further, the cost can be further prevented from increasing due to the addition of the nozzles 3a and 4a.

Further, in this heating process, the exhaust ports 53 and 54 discharge the superheated steam which has flowed along the resin workpiece W1 to outside the work heating apparatus 20. Therefore, new superheated steam can be successively blown on the resin workpiece W1. Thus, new superheated steam successively flows along the resin workpiece W1 so that the superheated steam can provide heat thereto. Accordingly, the resin workpiece W1 can be heated quickly.

Further, in this heating process, even when superheated steam flows from the vicinity of the exhaust port 53 toward the side of the main surface W1b of the resin workpiece W1 in the housing body 1a, the shielding plate 63 shields this superheated steam. Therefore, the exhaust port 53 can discharge superheated steam more easily. Thus, new superheated steam successively flows along the main surface W1a of the resin workpiece W1 so that the superheated steam can provide heat to the resin workpiece W1. Similarly, even when superheated steam flows from the vicinity of the exhaust port 54 toward the side of the main surface W1a of the resin workpiece W1 in the housing body 1a, the shielding plate 64 shields this superheated steam. Therefore, the exhaust port 54 can discharge superheated steam more easily. Thus, new superheated steam successively flows along the main surface W1b of the resin workpiece W1 so that the superheated steam can provide heat to the resin workpiece W1. Accordingly, the resin workpiece W1 can be further heated quickly.

### [Modified Example of First Embodiment]

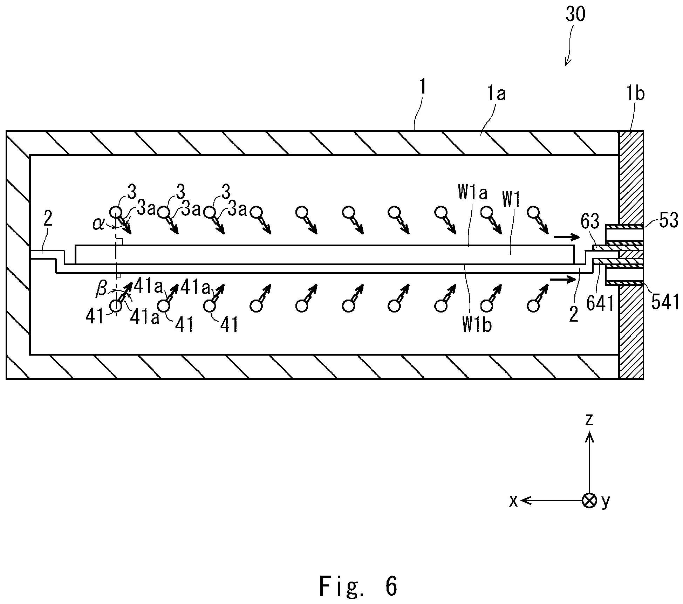

A modified example of first embodiment will be described with reference to Fig. 6.

As shown in Fig. 6, a workpiece heating apparatus 30 has the same configuration as the workpiece heating apparatus 10 has (see Figs. 1 to 3) except that a nozzle 41a, exhaust ports 53 and 541, and shielding plates 63 and 641 are further included.

The workpiece apparatus 30 includes the nozzle 41a, the exhaust ports 53 and 541, and the shielding plates 63 and 641. The nozzle 41a has the same configuration as the nozzle 4a has (see Figs. 4 and 5), and is disposed in a direction different from that of the nozzle 4a. In the other main surface W1b of the resin workpiece W1, the plurality of nozzles 41a are arranged so that each axis is inclined in the same direction as one direction along one main surface W1a (to the negative side in the x-axis direction of the example) with respect to a normal of the other main surface W1b. The nozzle 3a and the nozzle 41a sandwich the frame 2 and the resin workpiece W1 supported by the frame 2. The plurality of nozzles 41a blows superheated steam in the same direction as the direction in which the nozzle 3a blows superheated steam (on the negative side in the x-axis direction of the example). A blowing angle β at which the axis of the nozzle 41a and the main surface W1b on which the superheated steam is blown from the nozzle 41a intersect each other is within a range of between 0 (zero) ° and 90 °. The superheated steam which is blown from the nozzle 41a comes into contact with the main surface W1b of the resin workpiece W1 and then flows there along in the same direction as the direction in which superheated stem is blown from the nozzle 3a. The example of the nozzle 41a shown in Fig .6 has the same configuration as the example of the nozzle 4a has.

The exhaust port 541 is provided on the downstream side of the superheated steam supplied form the nozzle 41a. The exhaust port 541 can discharge superheated steam from the internal space of the workpiece heating apparatus 30 to outside the workpiece heating apparatus 30.

The shielding plate 641 is provided in the door 1b between the frame 2 and the exhaust port 541. The shielding plate 641 is provided at one end of the resin workpiece W1. A size of a space between one end of the resin workpiece W1 and the shielding plate 641 may be a size in which the resin workpiece W1 and the shielding plate 641 mechanically do not interfere with each other even when the resin workpiece W1 is thermally expanded by superheated steam, and may be a size capable of securing shielding performance of the required superheated steam. In the example shown in Fig. 6, the shielding panel 641 shields superheated steam supplied from the nozzle 41a and thus prevents the superheated steam from entering the side of the main surface W1a in the internal space of the housing body 1a. Accordingly, the superheated steam stays in the vicinity of the exhaust port 541 so as to be easily discharged therefrom to outside the housing body 1a.

A heating process for heating the resin workpiece W1 using the workpiece heating apparatus 30 will now be described. The door 1b of the workpiece heating apparatus 30 is opened, the resin workpiece W1 is placed on the frame 2, and then the door 1b is closed. A plurality of nozzles 41a are arranged so that each axis is inclined in one direction along the main surface W1b of the planar part of the resin workpiece W1 with respect to a normal of the planar part thereof in the same manner that the plurality of nozzles 3a are. In this state, superheated steam is blown on the resin workpiece W1 from the plurality of nozzles 3 a and 41a. Then, the superheated steam blown from the plurality of nozzles 3a and 41a comes into contact with the main surfaces W1a and W1b of the resin workpiece W1, and then uniformly flows along the main surfaces W1a and W1b of the resin workpiece W1. The superheated steam which has flowed along the main surfaces W1a and W1b of the resin workpiece W1 transmits heat to each part of the main surfaces W1a and W1b in contact with the superheated steam. By this flow of the superheated steam, the heat is transmitted to each part of the main surfaces W1a and W1b of the resin workpiece W1 with which the superheated steam successively comes into contact. Accordingly, the resin workpiece W1 can be uniformly heated without increasing the number of the nozzles 3a and 41a to be installed per area in each of the main surfaces W1a and W1b. Thus, as additional nozzles 3a and 41a do not need to be installed, the cost can be prevented from increasing.

Further, in this heating process, superheated steam is blown on both sides of the resin workpiece W1, that is, on each of the main surfaces W1a and W1b from the nozzles 3a and 41a. Accordingly, the superheated steam flows on each of the main surfaces W1a and W1b of the resin workpiece W1 in the same direction. The superheated steam conducts heat to the each of the main surfaces W1a and W1b of the resin workpiece W1. Accordingly, the resin workpiece W1 can be further heated uniformly. Further, the cost can be further prevented from increasing due to the addition of the nozzles 3a and 41a.

### [Analysis Example]

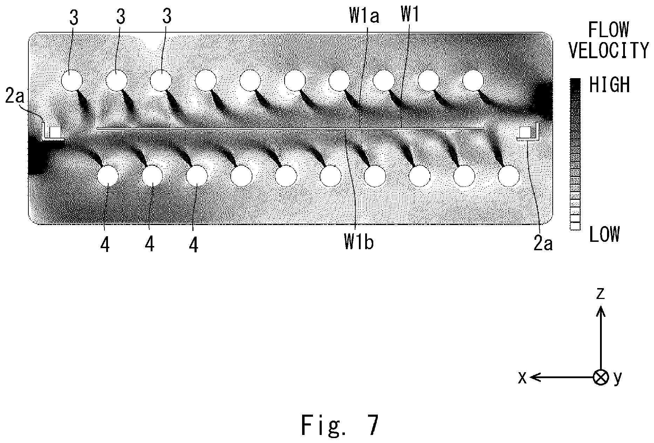

A result of analyzing flow velocity in a specific example of the workpiece heating apparatus 20 according to the second embodiment will be described with reference to Fig. 7.

The flow velocity of superheated steam in the internal space of the housing main body 1a of the workpiece heating device 20 in the case of heating a specific example of the resin workpiece W1 using a specific example of the workpiece heating device 20 according to the second embodiment has been analyzed. A specific example of the analysis result is shown in Fig .7. Note that in Fig. 7, components corresponding to the pipes 3 and 4, the resin workpiece W1, and a frame 2a which is a part of the frame 2 are respectively shown, but components corresponding to the exhaust ports 53 and 54, and the shielding plates 63 and 64 are omitted. Further, in Fig. 7, for the convenience of explanation, the components are assigned reference numbers corresponding to those of the respective components of the workpiece heating apparatus 20, and these reference numbers are used in the following explanation.

As shown in Fig. 7, it is not possible to confirm that each part of the resin workpiece W1 has a largely different flow velocity. This indicates that the flow velocity may be uniform in the vicinity of the resin workpiece W1. Therefore, the superheated steam which has flowed along the main surfaces W1a and W1b of the resin workpiece W1 may transmit heat to each part of the main surfaces W1a and W1b of the resin workpiece W1 with which the superheated steam comes into contact, and thereby may transmit heat to each part thereof with which the superheated steam successively comes into contact.
For example, the workpiece heating apparatus 20 (see Figs. 4 and 5) according to t the second embodiment includes the exhaust ports 53 and 54, but may include technical discharge means for discharging superheated steam. Examples of such discharge means include ducts, fans, valves and the like. Further, the workpiece heating apparatus 20 includes the shielding plates 63 and 64, but may include shielding members having various shapes other than a flat plate shape. Examples of the shape of such shielding members include a curved plate, a flat plate having a curved shape or a fin shape at a part thereof, and the like. Further, the workpiece heating apparatus 10 (see Figs. 1 to 3) may further include the exhaust port 53 and the shielding plate 63 as appropriate.

## Claims

1. A method for heating a resin workpiece, comprising a heating process for supplying superheated steam from a plurality of nozzles (3a, 4a, and 41a) to heat the resin workpiece (W1) having a planar part, wherein
in the heating process, the superheated steam is blown on the resin workpiece (W1) from the plurality of nozzles (3a, 4a, and 41a) to heat the resin workpiece in a state that each axis of the plurality of nozzles (3a, 4a, and 41a) is arranged so as to be inclined in one direction along a plane (W1a and W1b) of the planar part with respect to a normal of the planar part.

2. The method for heating a resin workpiece according to Claim 1, wherein the resin workpiece (W1) is a planar body having one main surface (W1a) and another main surface (W1b), and wherein the plurality of nozzles (3a, 4a, and 41a) include a plurality of first nozzles (3a) and a plurality of second nozzles (4a),
in the heating process, in the one main surface (W1a) of the planar body, the plurality of first nozzles (3a) are arranged so that each axis is inclined in one direction along the one main surface (W1a) with respect to a normal of the one main surface (W1a), and
in the other main surface (W1b) of the planar body, the plurality of second nozzles (4a) are arranged so that each axis is inclined in a direction opposite to the one direction with respect to a normal of the other main surface (W1b).

3. The method for heating a resin workpiece according to Claim 1 or 2, further comprising using discharge means (5, 53, 54, 541) for discharging the superheated steam, the discharge means (5, 53, 54, 541) being provided on the downstream side of the superheated steam with respect to the resin workpiece (W1).

4. The method for heating a resin workpiece according to Claim 3, further comprising using shielding members (63, 64, 641), the shielding members being provided on the both ends of the resin workpiece (W1) to shield the superheated steam.

## Patentansprüche

1. Verfahren zum Erwärmen eines Harzwerkstücks, das einen Heizprozess zum Auftragen von überhitztem Dampf aus einer Vielzahl von Düsen (3a, 4a und 41a) umfasst, um das Harzwerkstück (W1), welches einen ebenen Teil aufweist, zu erwärmen, wobei
bei dem Erwärmungsprozess der überhitzte Dampf aus der Vielzahl von Düsen (3a, 4a und 41a) auf das Harzwerkstück (W1) geblasen wird, um das Harzwerkstück in einem Zustand zu erwärmen, in dem jede Achse der Vielzahl von Düsen (3a, 4a und 41a) so angeordnet ist, dass sie in einer Richtung entlang einer Ebene (W1a und W1b) des ebenen Teils in Bezug auf eine Normale des ebenen Teils geneigt ist.

2. Verfahren zum Erwärmen eines Harzwerkstücks nach Anspruch 1, wobei das Harzwerkstück (W1) ein ebener Körper mit einer Hauptoberfläche (W1a) und einer anderen Hauptoberfläche (W1b) ist, und wobei die Vielzahl von Düsen (3a, 4a und 41a) eine Vielzahl von ersten Düsen (3a) und eine Vielzahl von zweiten Düsen (4a) umfasst,
bei dem Erwärmungsprozess in der einen Hauptoberfläche (W1a) des ebenen Körpers die Vielzahl von ersten Düsen (3a) so angeordnet sind, dass jede Achse in einer Richtung entlang der einen Hauptoberfläche (W1a) in Bezug auf eine Normale der einen Hauptoberfläche (W1a) geneigt ist, und
in der anderen Hauptoberfläche (W1b) des ebenen Körpers die Vielzahl der zweiten Düsen (4a) so angeordnet sind, dass jede Achse in einer Richtung entgegengesetzt zu der einen Richtung in Bezug auf eine Normale der anderen Hauptoberfläche (W1b) geneigt ist.

3. Verfahren zum Erwärmen eines Harzwerkstücks nach Anspruch 1 oder 2, das ferner die Verwendung von Auslassmitteln (5, 53, 54, 541) zum Auslassen des überhitzten Dampfes umfasst, wobei die Auslassmittel (5, 53, 54, 541) auf der stromabwärtigen Seite des überhitzten Dampfes in Bezug auf das Harzwerkstück (W1) vorgesehen sind.

4. Verfahren zum Erwärmen eines Harzwerkstücks nach Anspruch 3, das ferner die Verwendung von Abschirmelementen (63, 64, 641) umfasst, wobei die Abschirmelemente an den beiden Enden des Harzwerkstücks (W1) vorgesehen sind, um den überhitzten Dampf abzuschirmen.

## Revendications

1. Procédé pour chauffer une pièce à usiner en résine, comprenant un processus de chauffage pour fournir de la vapeur surchauffée à partir d'une pluralité de buses (3a, 4a et 41a) afin de chauffer la pièce à usiner en résine (W1) présentant une partie plane, dans lequel
durant le processus de chauffage, la vapeur surchauffée est soufflée sur la pièce à usiner en résine (W1) à partir de la pluralité de buses (3a, 4a et 41a) afin de chauffer la pièce à usiner en résine dans un état dans lequel chaque axe de la pluralité de buses (3a, 4a, et 41a) est agencé de manière à être incliné dans une certaine direction le long d'un plan (W1a et W1b) de la partie plane par rapport à une normale de la partie plane.

2. Procédé de chauffage d'une pièce à usiner en résine selon la revendication 1, dans lequel la pièce à usiner en résine (W1) est un corps plan présentant une certaine surface principale (W1a) et une autre surface principale (W1b), et dans lequel
la pluralité de buses (3a, 4a et 41a) inclut une pluralité de premières buses (3a) et une pluralité de secondes buses (4a),
durant le processus de chauffage, dans la certaine surface principale (W1a) du corps plan, la pluralité de premières buses (3a) sont agencées de sorte que chaque axe est incliné dans une certaine direction le long de la surface principale (W1a) par rapport à une normale de la certaine surface principale (W1a), et
dans l'autre surface principale (W1b), du corps plan, la pluralité de secondes buses (4a) sont agencées de sorte que chaque axe est incliné dans une direction opposée à la certaine direction par rapport à une normale de l'autre surface principale (W1b).

3. Procédé de chauffage d'une pièce à usiner en résine selon la revendication 1 ou 2, comprenant en outre une utilisation de moyens de décharge (5, 53, 54, 541) pour décharger la vapeur surchauffée, les moyens de décharge (5, 53, 54, 541) étant prévus sur le côté aval de la vapeur surchauffée par rapport à la pièce à usiner en résine (W1).

4. Procédé de chauffage d'une pièce à usiner en résine selon la revendication 3, comprenant en outre une utilisation d'éléments de protection (63, 64, 641), les éléments de protection étant prévus aux deux extrémités de la pièce à usiner en résine (W1) pour protéger de la vapeur surchauffée.
